# EUROPÄISCHE PATENTSCHRIFT

(11) **EP 3 143 388 B1**
(45) Veröffentlichungstag und Bekanntmachung des Hinweises auf die Patenterteilung: **05.01.2022**
(21) Anmeldenummer: 15725991.2
(22) Anmeldetag: 13.05.2015
(51) Int. Cl.: G01N 27/404, C01B 32/194, C01B 32/23

(54) **ELEKTROCHEMISCHER GASSENSOR MIT EINER GRAPHENELEKTRODE, DIE AUF EINER GASPERMEABLEN MEMBRAN AUFGETRAGEN IST UND HERSTELLUNGSVERFAHREN DER ELEKTRODE FÜR DIESEN ELEKTROCHEMISCHEN GASSENSOR**
ELECTROCHEMICAL GAS SENSOR HAVING A GRAPHENE ELECTRODE DEPOSITED ON A GAS-PERMEABLE MEMBRANE AND METHOD OF MANUFACTURING THE ELECTRODE FOR SAID ELECTROCHEMICAL GAS SENSOR
CAPTEUR DE GAZ ÉLECTROCHIMIQUE AVEC UNE ÉLECTRODE EN GRAPHÈNE DÉPOSÉE SUR UNE MEMBRANE PERMÉABLE AUX GAZ ET PROCÉDÉ DE FABRICATION DE L'ÉLECTRODE POUR LE CAPTEUR DE GAZ ÉLECTROCHIMIQUE

(30) Priorität: 16.05.2014 DE 102014007137
(43) Veröffentlichungstag der Anmeldung: 22.03.2017
(73) Patentinhaber: Dräger Safety AG & Co. KGaA, 23560 Lübeck (DE)
(72) Erfinder: PILZ, Sabrina, 23558 Lübeck (DE); METT, Frank, 23556 Lübeck (DE)
(74) Vertreter: Guthöhrlein, Gerhard
(86) Internationale Anmeldenummer: PCT/EP2015/000990
(87) Internationale Veröffentlichungsnummer: WO 2015/172886

(56) Entgegenhaltungen:
- WO-A1-2013/138698
- WO-A2-2011/159922
- DE-A1-102011 085 174
- GB-A- 2 342 168
- US-A1- 2013 192 461
- US-A1- 2013 305 927

## Beschreibung

Die vorliegende Erfindung betrifft einen elektrochemischen Gassensor sowie ein Herstellungsverfahren für eine Elektrode für einen elektrochemischen Gassensor.

Elektrochemische Gassensoren sind allgemein bekannt. Sie weisen üblicherweise mehrere Elektroden auf, die in leitendem Kontakt mit einer Elektrolytflüssigkeit stehen und auf diese Weise ein galvanisches Element - im Folgenden auch elektrochemische Messzelle genannt - bilden. Für den spezifischen Nachweis von verschiedenen Analyten kommt es dabei sowohl auf die Zusammensetzung der Elektrolytflüssigkeit an als auch auf das Material, aus dem die Elektroden bestehen. Dabei ist eine Grundvoraussetzung, dass die Elektroden zumindest teilweise aus einem leitfähigen Material bestehen. Neben verschiedenen Metallen, ist daher auch Kohlenstoff ein Material, aus welchem die Elektroden gefertigt sein können.

In diesem Zusammenhang ist aus der DE 199 39 011 C1 die Verwendung von diamantartigem Kohlenstoff (DLC - diamond like carbon) als Messelektrodenmaterial in einem Gassensor für toxische Gase - wie zum Beispiel F₂ oder Cl₂ - bekannt. Mit einer solchen Elektrode kann ein Messbereich bis zu einer Größenordnung von etwa 2 ppm abgedeckt werden.

Auch DE 10 2006 014 713 B3 offenbart einen elektrochemischen Gassensor mit einer kohlenstoffbasierten Messelektrode, nämlich mit einer Messelektrode, die Kohlenstoffnanoröhren enthält. Diese kann zum Beispiel zum Nachweis von Analyten wie etwa SO₂ oder Diboran verwendet werden. Es besteht jedoch auch eine relativ hohe Querempfindlichkeit für andere Gase, wie z.B. H₂S oder Ozon.

DE102011085174 offenbart einen elektrochemischen Gassensor mit einer gasdurchlässigen Membran, auf die das Elektrodenmaterial Iridium aufgetragen ist. Die Elektrodenmaterialien können auch aus einem Metall aus der Gruppe enthaltend Cu, Ni, Ti, Pt, Au, Pd, Ag, Ru und Rh, Mischungen davon oder deren Oxide oder Kohlenstoff, wie z.b. in Form von Kohlenstoff-Nanoröhren, Graphen, diamantartigem Kohlenstoff oder Graphit bestehen, wobei die Elektroden entweder auf der gasdurchlässigen Membran aufgebracht oder in Pulverform direkt mit dem Elektrolyten vermischt sind.

Eine weitere bekannte Kohlenstoffmodifikation ist Graphen. Es sind zwar verschiedene Methoden zur Herstellung von leitfähigem Graphen bekannt - bspw. durch Reduktion von Graphenoxid mit Hilfe eines Kamerablitzes (Kamerablitzverfahren) oder durch Bestrahlung mit UV-Licht. So offenbaren beispielsweise US 2013/0305927 A1 eine gaspermeable graphenbeschichtete Membran und WO 2011/159922 A2 ein Verfahren zur Herstellung eines Graphen-Films. Es ist bisher jedoch nicht gelungen, Graphen zur Herstellung von Elektroden zu verwenden, welche effektiv in einem elektrochemischen Gassensor eingesetzt werden können. Mit Hilfe des Kamerablitzverfahrens ist es zwar möglich, eine im inneren leitfähige Schicht herzustellen, die Oberfläche der Graphenoxid-Schicht wird dabei jedoch zerstört, so dass keine Reaktion mit den von außen an die Schicht herantretenden Analyten möglich ist. Wird statt des Kamerablitzes ein oberflächenschonenderes Verfahren - etwa Bestrahlung mit UV-Licht - angewandt, besteht die Gefahr, dass die Reaktion nachdem die Oberfläche in Graphen umgewandelt wurde stoppt und das innenliegende Material nicht reduziert wird. In der Folge kann keine ausreichende Leitfähigkeit erreicht werden, um die Elektrode effektiv und in einem ausreichend breiten Messbereich in einem elektrochemischen Gassensor einsetzen zu können.

Der Erfindung liegt mithin die Aufgabe zu Grunde, eine verbesserte Elektrode für einen elektrochemischen Gassensor bereitzustellen. Ein elektrochemischer Gassensor, der eine solche Elektrode aufweist, soll über einen möglichst breiten Messbereich (hohe Messbereichsdynamik) verfügen und gleichzeitig eine möglichst geringe Querempfindlichkeit aufweisen. Wünschenswert ist auch, dass die Messelektrode sowohl flexibel einsetzbar als auch leicht zu verarbeiten ist. Besonders wünschenswert ist es auch, ein Verfahren zur Herstellung einer solchen Elektrode bereitzustellen, wobei Graphen als Elektrodenmaterial verwendbar ist.

Als Lösung sieht die Erfindung einen elektrochemischen Gassensor mit den Merkmalen des Anspruchs 1, sowie ein Herstellungsverfahren für eine Elektrode für einen solchen Gassensor entsprechend Anspruch 11 vor. Weitere Ausgestaltungen sind Gegenstand der jeweils abhängigen Ansprüche.

Bei einem elektrochemischen Gassensor, mit einem Sensorgehäuse, einer Messelektrode und einer Hilfselektrode sieht die Erfindung vor, dass die Messelektrode eine Elektrode ist, die eine gaspermeable Membran aufweist, wobei auf der gaspermeablen Membran eine Graphenschicht als Elektrodenmaterial aufgetragen ist.

Bei der gaspermeablen Membran kann es sich beispielsweise um eine poröse Membran aus Polytetrafluorethylen handeln. Denkbar sind aber selbstverständlich auch andere Membranmaterialien. Beispielsweise ist auch vorstellbar, dass es sich bei der gaspermeablen Membran um eine Membran aus PFA, FEP, aber auch Cyclopore^{®}, Isopore oder Nuclepore^{®}, mithin also Polycarbonaten bzw. Polyestern handelt. Die gaspermeable Membran dient dabei als Träger für das Elektrodenmaterial. Das Elektrodenmaterial ist typischerweise diejenige Komponente, die als Elektrode in der galvanischen Zelle wirkt. Erfindungsgemäß besteht das Elektrodenmaterial aus Graphen, das als Schicht auf den Träger aufgetragen ist. Das Graphen kann dabei sowohl als einlagiges (Single-Layer) als auch als mehrlagiges (Multi-Layer) Graphen vorliegen. Besonders günstig ist es, wenn die Elektrode ausschließlich aus der gaspermeablen Membran und der Graphenschicht besteht.

Vorteilhaft ist es auch, wenn das Graphen aus einer Dispersion heraus auf der gaspermeablen Membran aufgetragen ist. Dabei ist sowohl vorstellbar, dass die Dispersion eine Dispersion ist, die Graphen enthält (Graphendispersion), als auch, dass die Dispersion eine Dispersion ist, die eine Graphenvorstufe enthält, wie z.B. Graphenoxid (Graphenoxiddispersion). Eine auf diese Weise erhaltene Elektrode hat eine ausreichende Leitfähigkeit zur Verwendung in einem elektrochemischen Gassensor. Insbesondere ist es dabei günstig, wenn der Widerstand der erfindungsgemäßen Elektrode geringer als 10 kQ, bevorzugt geringer als 200 Ω ist.

Überraschenderweise hat sich gezeigt, dass eine solche Elektrode besonders gut geeignet ist, um elektrochemische Sensoren mit einer hohen Selektivität und Messbereichsdynamik bereitzustellen. Insbesondere die Querempfindlichkeit des Sensors kann dabei auch reduziert werden. Auch ist eine solche Elektrode überraschend robust, so dass sie problemlos weiter verarbeitet werden kann, ohne dabei Schaden zu erleiden oder an Qualität zu verlieren. Weiterhin ist die erfindungsgemäße Elektrode in hohem Maße unempfindlich gegenüber Feuchtigkeitsschwankungen.

In einer ersten, besonders einfachen, Ausführungsvariante liegt das Graphen als mehrlagiges Graphen vor. Eine solche Elektrode, d.h. eine Elektrode welche eine gaspermeable Membran aufweist, wobei die gaspermeable Membran mit mehrlagigem Graphen beschichtet ist, hat bevorzugt eine hellgraue bis dunkelgraue Färbung. Sie ist beispielsweise herstellbar, indem kostengünstig verfügbares Graphenpulver in einer flüchtigen Flüssigkeit (Dispergiermittel) in Dispersion gebracht und auf eine gaspermeable Membran gegossen wird. Das Dispergiermittel verdampft anschließend. Dabei entsteht eine gleichmäßige Dünnschicht mehrlagigen Graphens auf der Membran. Man erkennt, dass die erfindungsgemäße Elektrode mithin eine Elektrode sein kann, die eine gaspermeable Membran aufweist, wobei die gaspermeable Membran eine Graphenschicht als Elektrodenmaterial aufweist und wobei die Graphenschicht durch ein Verfahren hergestellt ist, das die Schritte
a) Dispergieren von Graphenpulver in einer flüchtigen Flüssigkeit,
b) Aufbringen der in Schritt a) hergestellten Graphendispersion auf die gaspermeable Membran und
c) Verdampfen der flüchtigen Flüssigkeit
aufweist. Durch das Dispergieren von Graphenpulver entsprechend Schritt a) wird dabei die in Schritt b) verwendete Graphendispersion hergestellt. Bei der flüchtigen Flüssigkeit kann es sich um eine beliebige flüchtige Flüssigkeit handeln, vorausgesetzt, Graphen und/oder Graphenoxid ist darin dispergierbar, beispielsweise kann es sich in einem sehr einfachen Fall um Wasser handeln. Denkbar ist auch, dass ein organisches Lösungsmittel, wie z.B. Propanol zugesetzt und/oder verwendet wird.

Vorteilhaft ist es auch, wenn die auf der gaspermeablen Membran aufgetragene Graphenschicht aus reduziertem Graphenoxid besteht. Beispielsweise kann das Graphen, das die Graphenschicht bildet, ein Graphen sein, das durch die Reduktion von Graphenoxid mit Hilfe von Hydrazin oder lodwasserstoff oder einer Mischung aus Hydrazin und lodwasserstoff entstanden ist. Die Reduktion des Graphenoxides zu Graphen kann dabei vor, während oder nach der Schichtablagerung auf dem Träger, d.h. der gaspermeablen Membran erfolgen.

Beispielsweise, kann das Graphen auf der gaspermeablen Membran ein Graphen sein, das hergestellt ist, indem zunächst eine wässrige Graphenoxiddispersion auf die gaspermeable Membran aufgebracht wird und indem dann, nachdem sich das Graphenoxid auf der Membran abgesetzt hat, eine Behandlung mit einem Reduktionsmittel erfolgt. Das Reduktionsmittel kann dabei zum Beispiel ausgewählt sein aus Hydrazin, lodwasserstoff und einer Mischung aus Hydrazin und Iodwasserstoff. Mit anderen Worten, es ist günstig, wenn die Elektrode durch ein Verfahren hergestellt ist, das die folgenden Schritte aufweist:
a) Bereitstellen einer gaspermeablen Membran
b) Aufbringen einer Graphenoxiddispersion auf der gaspermeablen Membran
c) Behandeln des auf der gaspermeablen Membran abgesetzten Graphenoxides mit einem Reduktionsmittel.

Dabei ist das Reduktionsmittel bevorzugt ausgewählt aus der Gruppe enthaltend, Hydrazin, lodwasserstoff und Mischungen enthaltend Hydrazin und lodwasserstoff.

Die Behandlung mit dem Reduktionsmittel entsprechend Schritt c) kann dabei auf unterschiedlichen Wegen erfolgen. Vorstellbar ist beispielsweise, dass die gaspermeable Membran, auf welcher sich das Graphenoxid abgesetzt hat, mit einem reduzierenden Gas bedampft wird - zum Beispiel mit Hydrazin, lodwasserstoff oder einer Mischung aus beiden. Alternativ kann die gaspermeable Membran samt dem sich darauf befindlichen Graphenoxid auch in eine Hydrazin- und/oder lodwasserstofflösung eingelegt werden.

Die Graphenoxiddispersion, die in Schritt b) verwendet wird, wird bevorzugt durch das Dispergieren von Graphenoxid in einer flüchtigen Flüssigkeit bereitgestellt. Auch hier kann es sich bei der flüchtigen Flüssigkeit um eine beliebige flüchtige Flüssigkeit handeln, vorausgesetzt, Graphen und/oder Graphenoxid ist darin dispergierbar, beispielsweise kann es sich in einem sehr einfachen Fall um Wasser handeln. Denkbar ist auch, dass ein organisches Lösungsmittel, wie z.B. Propanol zugesetzt und/oder verwendet wird.

Man erkennt, dass die erfindungsgemäße Elektrode mithin auch eine Elektrode sein kann, die eine gaspermeable Membran aufweist, wobei die gaspermeable Membran eine Graphenschicht aufweist und wobei die Graphenschicht durch die Schritte
a) Dispergieren von Graphenoxid in einer flüchtigen Flüssigkeit,
b) Aufbringen der in Schritt a) hergestellten Graphenoxiddispersion auf die gaspermeable Membran, so dass sich das Graphenoxid aus der Dispersion auf der gaspermeablen Membran als Graphenoxidschicht absetzt und
c) Behandeln der Graphenoxidschicht mit einem Reduktionsmittel herstellbar ist. Auch hier ist das Reduktionsmittel bevorzugt ausgewählt aus der Gruppe enthaltend, Hydrazin, lodwasserstoff und Mischungen enthaltend Hydrazin und lodwasserstoff.

Günstig ist es dabei in jedem Fall auch, wenn nach Schritt b) noch als zusätzlicher Schritt, der Schritt
b') Konzentrieren der Dispersion ausgeführt wird. Auf diese Weise wird das Absetzen des Graphenoxides auf der gaspermeablen Membran unterstützt und gefördert. Das Konzentrieren der Dispersion kann dabei zum Beispiel durch vollständiges oder teilweises Verdampfen der flüchtigen Flüssigkeit bis hin zur vollständigen Austrocknung der Dispersion erfolgen. Dabei kann die mit der Dispersion behandelte gaspermeable Membran beispielsweise auch einem Vakuum ausgesetzt werden. In einer besonders bevorzugten Ausführungsform ist die Elektrode mithin eine Elektrode, die eine gaspermeable Membran aufweist, wobei die gaspermeable Membran eine Graphenschicht aufweist und wobei die Graphenschicht durch die Schritte
a) Dispergieren von Graphenoxid in einer flüchtigen Flüssigkeit (Herstellen einer Graphenoxiddispersion),
b) Aufbringen der in Schritt a) hergestellten Graphenoxiddispersion auf die gaspermeable Membran, so dass sich das Graphenoxid aus der Dispersion auf der gaspermeablen Membran als Graphenoxidschicht absetzt und
b') Konzentrieren der Dispersion, bevorzugt Konzentrieren der Dispersion durch Verdampfen der flüchtigen Flüssigkeit,
c) Behandeln der Graphenoxidschicht mit einem Reduktionsmittel herstellbar ist, wobei das Reduktionsmittel ausgewählt ist aus der Gruppe enthaltend Hydrazin, lodwasserstoff und Mischungen enthaltend Hydrazin und lodwasserstoff.

Alternativ ist auch denkbar, dass die Graphenoxiddispersion zuerst mit einem Reduktionsmittel behandelt wird und die so reduzierte Dispersion im Anschluss auf eine gaspermeable Membran aufgebracht wird. Mit anderen Worten kann die Elektrode auch eine Elektrode sein, die eine gaspermeable Membran aufweist, wobei die gaspermeable Membran eine Graphenschicht als Elektrodenmaterial aufweist und wobei die Elektrode hergestellt ist durch ein Verfahren, das die Schritte aufweist:
a) Dispergieren von Graphenoxid in einer flüchtigen Flüssigkeit
b) Behandeln der Graphenoxiddispersion mit einem Reduktionsmittel, so dass die Graphenoxiddispersion ganz oder zumindest teilweise in eine Graphendispersion überführt wird
c) Aufbringen der entsprechend Schritt b) behandelten Dispersion auf die gaspermeable Membran
d) Verdampfen der flüchtigen Flüssigkeit herstellbar ist. Dabei kann das Reduktionsmittel auch hier ausgewählt sein aus der Gruppe enthaltend Hydrazin, lodwasserstoff und Mischungen enthaltend Hydrazin und lodwasserstoff.

In jedem Fall bildet das reduzierte Graphenoxid eine dunkelgraue Schicht auf der gaspermeablen Membran. Die so erhaltene Elektrode zeichnet sich durch eine hervorragende Leitfähigkeit und eine hohe Abriebfestigkeit auf der Membran aus.

Ein Verfahren zur Herstellung einer erfindungsgemäßen Elektrode weist die folgenden Schritte auf:
a. Bereitstellen einer Graphen- und/oder Graphenoxid-haltigen Dispersion, wobei eine flüchtige Flüssigkeit als Dispersionsmittel dient,
b. Aufbringen der Dispersion auf eine gaspermeable Membran
c. Verdampfen der flüchtigen Flüssigkeit, derart dass sich das Graphen und/oder Graphenoxid auf der gaspermeablen Membran als Graphen- und/oder Graphenoxidschicht absetzt
d. optional Behandeln des Graphenoxids mit einem Reduktionsmittel,
wobei die Schritte a., b., c. und d. wahlweise in der Reihenfolge a., b., c., d. oder a., d., b., c. ausführbar sind.

Der Schritt d) wird dabei optional jeweils nur dann ausgeführt, wenn als Elektrodenmaterial in Schritt a. ein Graphenoxid-haltiges Material in Dispersion gebracht wurde. Beispielsweise kann zunächst eine gleichmäßige Schicht von Graphenoxid auf der gaspermeablen Membran erzeugt werden. Diese Schicht kann dann mit dem Reduktionsmittel in eine Graphenschicht umgewandelt werden. Die so erhaltene Graphenschicht dient als Elektrodenmaterial, während die gaspermeable Membran als Träger für das Elektrodenmaterial dient.

Eine erste Variante des Verfahrens sieht mithin vor, dass das Verfahren die Schritte aufweist:
a. Bereitstellen einer Graphen-haltigen Dispersion, wobei eine flüchtige Flüssigkeit als Dispersionsmittel dient,
b. Aufbringen der Dispersion auf eine gaspermeable Membran
c. Verdampfen der flüchtigen Flüssigkeit, derart dass sich das Graphen auf der gaspermeablen Membran als Graphenschicht absetzt.

Eine weitere Variante sieht vor, dass das Verfahren die Schritte aufweist:
a. Bereitstellen einer Graphenoxid-haltigen Dispersion, wobei eine flüchtige Flüssigkeit als Dispersionsmittel dient,
b. Aufbringen der Dispersion auf eine gaspermeable Membran
c. Verdampfen der flüchtigen Flüssigkeit, derart dass sich das Graphenoxid auf der gaspermeablen Membran als Graphenoxidschicht absetzt
d. Behandeln der Graphenoxidschicht mit einem Reduktionsmittel, so dass auf der gaspermeablen Membran eine Graphenschicht entsteht.

Noch eine weitere Variante sieht vor, dass das Verfahren die Schritte aufweist:
a) Bereitstellen einer Graphenoxid-haltigen Dispersion, wobei eine flüchtige Flüssigkeit als Dispersionsmittel dient,
d) Behandeln des Graphenoxids mit einem Reduktionsmittel,
b) Aufbringen der Dispersion auf eine gaspermeable Membran
c) Verdampfen der flüchtigen Flüssigkeit, derart dass sich das entsprechend dem vorausgegangenen Schritt d) aus dem Graphenoxid gebildete Graphen auf der gaspermeablen Membran als Graphenschicht absetzt.

Wie bereits oben beschrieben, kann die Behandlung mit dem Reduktionsmittel entsprechend Schritt d. beispielsweise durch Bedampfen der Graphenoxidschicht erfolgen. Dabei ist es bevorzugt, wenn das Reduktionsmittel als Gas eingesetzt wird. Alternativ kann auch die gaspermeable Membran samt der Graphenoxidschicht in das Reduktionsmittel getaucht werden. In diesem Fall ist es bevorzugt, wenn das Reduktionsmittel als Lösung eingesetzt wird. Auch wenn die Behandlung des Graphenoxides in der Dispersion vor dem Auftragen auf die gaspermeable Membran erfolgt, kann das Reduktionsmittel sowohl als Gas als auch als Lösung eingesetzt werden. Man erkennt insofern in jedem Fall, dass es günstig ist, wenn das Reduktionsmittel in gasförmigem Zustand oder als Lösung eingesetzt wird.

Weiter hat es sich überraschenderweise als besonders günstig erwiesen, wenn das Reduktionsmittel ausgewählt ist aus der Gruppe enthaltend Hydrazin, lodwasserstoff und Mischungen enthaltend Hydrazin und lodwasserstoff. Besonders bevorzugt ist dabei lodwasserstoff oder eine Mischung aus Hydrazin und lodwasserstoff, ganz besonders bevorzugt ist lodwasserstoff.

Die Elektrode kann besonders vorteilhaft als Messelektrode in einem elektrochemischen Gassensor eingesetzt werden. Je nach genauer Zusammensetzung des Elektrolyten können dabei verschiedene Stoffe mit Hilfe des Gassensors nachgewiesen werden. Beispielsweise ist der Nachweis von Anästhesiegasen, wie z.B. Propofol möglich. Auch ist es vorstellbar, dass Gase wie z.B. Chlordioxid nachgewiesen werden.

Insofern betrifft die Erfindung in weiteren Aspekten die Verwendung einer erfindungsgemäßen Elektrode als Messelektrode in einem elektrochemischen Gassensor. Dabei kann der elektrochemische Gassensor ein Gassensor zur Bestimmung von Propofol sein. Denkbar ist auch, dass der elektrochemische Gassensor ein Gassensor zur Bestimmung von Chlordioxid ist. Man erkennt, dass eine weitere Lösung der oben genannten Aufgabe in einem elektrochemischen Gassensor, besteht, bevorzugt einem elektrochemischen Gassensor zum Nachweis von Propofol und/oder Chlordioxid, wobei der elektrochemische Gassensor wenigstens eine erfindungsgemäße Elektrode, wie sie oben beschrieben ist, aufweist.

Neben der Verwendung eines solchen elektrochemischen Gassensors zum Nachweis von Propofol oder Chlordioxid können mit einem solchen elektrochemischen Gassensor auch andere gasförmige Analyte bestimmt werden. Dabei können je nach Analyt unterschiedliche Elektrolyt, gegebenenfalls unter Mediator-Zusatz, zum Einsatz kommen. Beispielsweise ist - bei entsprechender Elektrolytauswahl - der Nachweis von Hydridgasen, wie z.B. Diboran, Silan, Phosphin oder Arsin, der Nachweis von Phenolen oder auch der Nachweis von Gasen wie etwa Cl₂, NO₂, H₂O₂, O₃, SO₂ und vielen weiteren möglich.

Weitere Merkmale, Details und Einzelheiten ergeben sich aus den nachfolgend beschriebenen Figuren und Ausführungsbeispielen. Es versteht sich von selbst, dass diese Ausführungsbeispiele nur exemplarisch sind und dass sich für den Fachmann anhand der vorliegenden Beschreibung ohne Probleme weitere Varianten und Ausführungsbeispiele ergeben. Dabei zeigt
- Fig. 1: eine schematische Darstellung eines erfindungsgemäßen elektrochemischen Gassensor mit einer erfindungsgemäßen Elektrode als Messsensor;
- Fig. 2: ein Messdiagramm, erhalten durch Bestimmung von Propofol (20ppb) mit Hilfe eines Gassensors, der die erfindungsgemäße Elektrode entsprechend Beispiel 2 einsetzt;
- Fig. 3: ein Messdiagramm, erhalten durch Bestimmung von Chlordioxid (1,4 ppm) mit Hilfe eines Gassensors, der die erfindungsgemäße Elektrode entsprechend Beispiel 3 einsetzt.

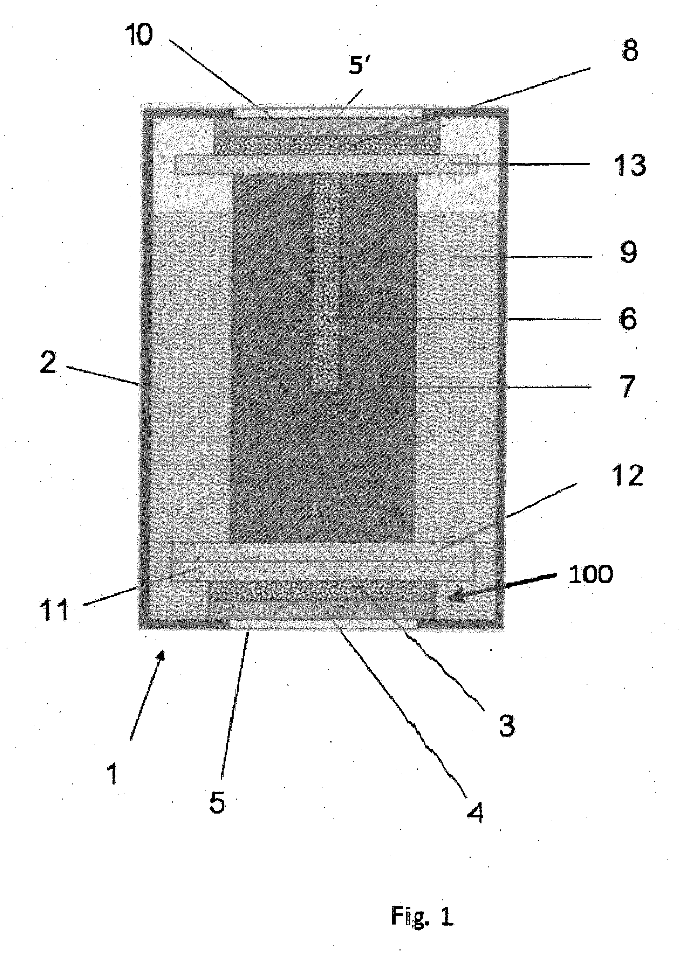

Der in Fig. 1 schematisch gezeigte elektrochemische Gassensor 1 hat ein Sensorgehäuse 2, in welchem eine Messelektrode 100, eine optionale Bezugselektrode 6 und eine Hilfselektrode 8 angeordnet sind. Das Sensorgehäuse 2 weist weiterhin eine erste Öffnung 5 und eine zweite Öffnung 5' auf. Die erste Öffnung 5 dient als Gaseinlass. Sie liegt gegenüber der Messelektrode 100. Durch die Öffnung 5 einströmendes Gas kann mithin unmittelbar auf die Messelektrode 100 treffen. Die zweite Öffnung 5' dient als Gasauslass. Sie liegt gegenüber der Hilfselektrode 8. An der Hilfselektrode 8 entstehendes Gas kann mithin direkt durch die Öffnung 5' aus dem Gassensor 1 austreten.

Das Sensorgehäuse 2 ist mit einem Elektrolyt 9 gefüllt. Der Elektrolyt 9 bedeckt die Messelektrode 100. Weiterhin steht der Elektrolyt 9 in leitendem Kontakt mit der Hilfselektrode 8, sowie mit der Bezugselektrode 6. Im dargestellten Ausführungsbeispiel ist hierfür innerhalb des Sensorgehäuses 2 ist ein Docht 7 ausgebildet. Mit Hilfe des Dochtes 7 wird der Elektrolyt 9 zur Hilfselektrode 8 geleitet. Die Bezugselektrode 6 ist in diesem Ausführungsbeispiel innerhalb des Dochtes 7 angeordnet. Andere Anordnungsweise und Möglichkeiten einen elektrisch leiteten Kontakt zwischen Elektrolyt 9 und den Elektroden, insbesondere zwischen dem Elektrolyt 9, der Messelektrode 100 und der Hilfselektrode 8 herzustellen, sind selbstverständlich denkbar.

Der elektrochemische Gassensor 1 weist zudem mehrere Vliese 11, 12, 13 auf. Diese dienen dazu, die übrigen Sensorkomponenten im korrekten Abstand zueinander sicher zu stabilisieren. Mit anderen Worten, die Vliese 11, 12, 13 halten die Messelektrode 100, die Hilfselektrode 8 und den Doch 7 samt Bezugselektrode 6 an ihrer Position und stellen sicher, dass sich diese Bauteile im jeweils gewünschten Abstand zueinander befinden.

Man erkennt in Fig. 1, dass die Messelektrode 100 aus einer Graphenschicht 3 besteht, die auf einer gaspermeablen Membran 4 aufgebracht ist.

Die Hilfselektrode 8 besteht zweckmäßig aus einem Edelmetall oder ebenfalls aus Kohlenstoff. Denkbar sind zum Beispiel Gold, Platin und/oder Iridium als Elektrodenmaterial.

Der Elektrolyt 9 besteht in einer ersten Variante aus Schwefelsäure. Vorstellbar sind auch Varianten, bei welchen als hygroskopische Alkali- oder Erdalkalimetallhalogenide als Leitelektrolyte eingesetzt werden. Der Elektrolyt 9 kann optional zusätzlich einen Mediator aufweisen.

### Beispiel 1 - Herstellung einer Elektrode zur Verwendung in einem elektrochemischen Gassensor

Eine Elektrode zur Verwendung in einem elektrochemischen Gassensor aus reduziertem Graphenoxid wurde wie folgt hergestellt. Zunächst wurde eine Graphenoxiddispersion aus 1 g Single-Layer-Graphenoxid auf 1L destilliertem Wasser hergestellt. Davon wurden 4,5 ml Lösung abgenommen und mit ca. 70 ml 2-Propanol vermischt. Anschließend wurde diese Dispersion auf eine gaspermeable Membran (PTFE-Membran) mit einem Durchmesser von 80 mm gegossen. Das Dispergiermittel wurde anschließend unter Vakuum verdampft. Die so erhaltene Graphenoxidelektrode wurde dann für ca. 5 Stunden in eine konzentrierte lodwasserstofflösung eingelegt und anschließend an der Luft getrocknet. Die erhaltene Elektrode besteht aus einer gaspermeablen Membran (4) auf welcher eine Graphenschicht (3) als Elektrodenmaterial aufgetragen ist. Sie hat einen Widerstand von 140 Ωcm⁻¹. Man erkennt, dass die Graphenschicht (3) aus einer Dispersion heraus auf der gaspermeablen Membran (4) aufgetragen ist und dass die Graphenschicht durch ein Verfahren hergestellt ist, dass die Schritte
a) Dispergieren von Graphenpulver in einer flüchtigen Flüssigkeit,
b) Aufbringen der in Schritt a) hergestellten Graphendispersion auf die gaspermeable Membran (4) und
c) Verdampfen der flüchtigen Flüssigkeit
aufweist. Die Graphenschicht (3) besteht zudem aus reduziertem Graphenoxid.

Zur Herstellung der Elektrode (100) wurde die gaspermeable Membran (4) zweckmäßigerweise zu Beginn des Verfahrens bereitgestellt, bevor die Graphenoxiddispersion auf der gaspermeablen Membran (4) aufgebracht wurde.

### Beispiel 2 - Nachweis von Propofol mit Hilfe einer Graphen-Elektrode

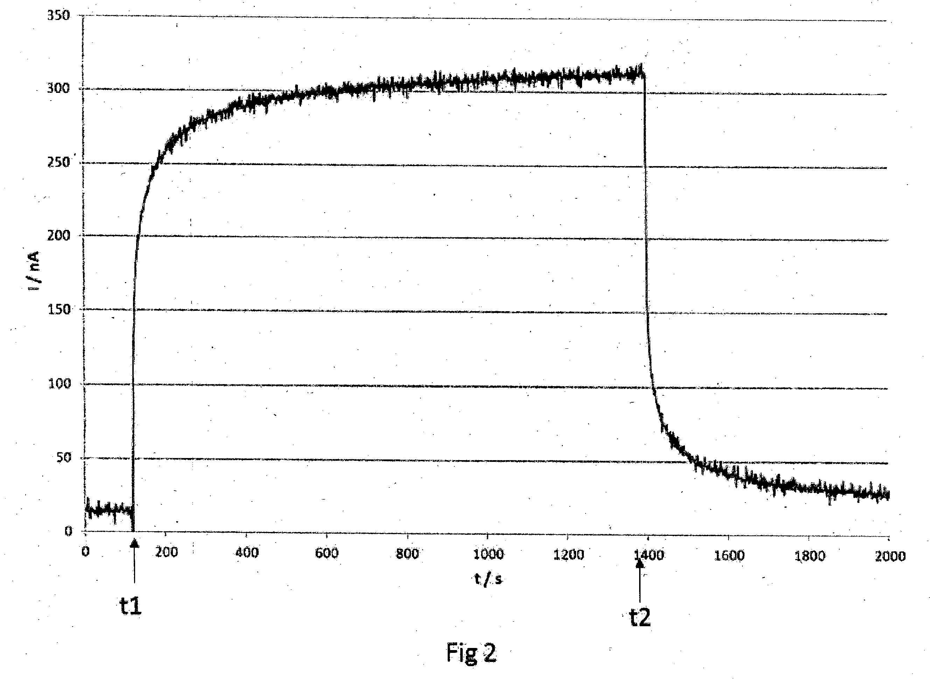

Ein erfindungsgemäßer elektrochemischer Gassensor mit einer erfindungsgemäßen Messelektrode wurde mit Propofol in einer Konzentration von 20 ppb. Die Begasung erfolgte bei einer relativen Luftfeuchte von 50% und einer Umgebungstemperatur von 20 °C. Man erkennt in Fig. 2, dass der elektrochemische Gassensor eine nahezu Stufenförmige Messkurve liefert. Dabei ist auf der Abszisse die Begasungszeit in Sekunden und auf der Ordinate der Sensorstrom aufgetragen. Die Begasung wurde zum Zeitpunkt t1 gestartet und zum Zeitpunkt t2 beendet. Man erkennt dass sich der Sensorstrom zu Beginn der Begasung im Zeitpunkt t1 nahezu sprunghaft verändert und das Reaktionsgas (Propofol) schnell und zuverlässig anzeigt. Nach Absetzung des Reaktionsgases im Zeitpunkt t2 kehrt der Gassensor ebenso schnell wieder in den Ausgangszustand zurück.

### Beispiel 3 - Nachweis von Chlordioxid mit Hilfe einer Graphen-Elektrode

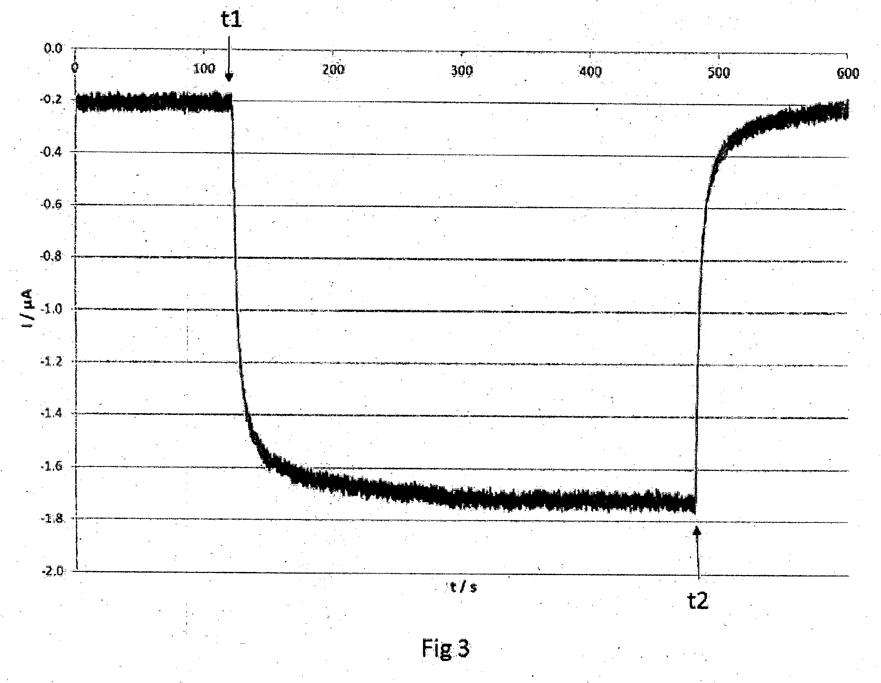

Ein erfindungsgemäßer elektrochemischer Gassensor mit einer erfindungsgemäßen Messelektrode wurde mit Chlordioxid in einer Konzentration von 1,4 ppm. Die Begasung erfolgte bei einer relativen Luftfeuchte von 50% und einer Umgebungstemperatur von 20 °C. Man erkennt in Fig. 3, dass der elektrochemische Gassensor eine nahezu Stufenförmige Messkurve liefert. Dabei ist auf der Abszisse die Begasungszeit in Sekunden und auf der Ordinate der Sensorstrom aufgetragen. Die Begasung wurde zum Zeitpunkt t1 gestartet und zum Zeitpunkt t2 beendet. Man erkennt dass sich der Sensorstrom zu Beginn der Begasung im Zeitpunkt t1 nahezu sprunghaft verändert und das Reaktionsgas (Propofol) schnell und zuverlässig anzeigt. Nach Absetzung des Reaktionsgases im Zeitpunkt t2 kehrt der Gassensor ebenso schnell wieder in den Ausgangszustand zurück.

### Bezugszeichenliste

- 1: Elektrochemischer Sensor
- 100: Messelektrode, Elektrode
- 2: Gehäuse
- 3: Graphenschicht
- 4: Membran
- 5: Öffnung
- 5': Öffnung
- 6: Bezugselektrode
- 7: Docht
- 8: Hilfselektrode
- 9: Elektrolyt
- 10: Membran
- 11: Vlies
- 12: Vlies
- 13: Vlies

- t1: Zeitpunkt
- t2: Zeitpunkt

## Patentansprüche

1. Elektrochemischer Gassensor (1), mit einem Sensorgehäuse (2), welches mit Elektrolyt (9) gefüllt ist, einer Messelektrode (100) und einer Hilfselektrode (8), die in dem Sensorgehäuse (2) angeordnet sind, **dadurch gekennzeichnet, dass** die Messelektrode (100) eine Elektrode ist, die eine gaspermeable Membran aufweist, wobei auf der gaspermeablen Membran (4) eine Graphenschicht (3) als Elektrodenmaterial aufgetragen ist.

2. Elektrochemischer Gassensor (1) nach Anspruch 1, **dadurch gekennzeichnet, dass** die Graphenschicht (3) aus einer Dispersion heraus auf der gaspermeablen Membran (4) aufgetragen ist.

3. Elektrochemischer Gassensor (1) nach einem der Ansprüche 1 oder 2, **dadurch gekennzeichnet, dass** die Graphenschicht (3) als mehrlagiges Graphen vorliegt.

4. Elektrochemischer Gassensor (1) nach einem der Ansprüche 1 bis 3, **dadurch gekennzeichnet, dass** die Graphenschicht (3) durch die Schritte
a. Dispergieren von Graphenpulver in einer flüchtigen Flüssigkeit,
b. Aufbringen der in Schritt a) hergestellten Graphendispersion auf die gaspermeable Membran (4) und
c. Verdampfen der flüchtigen Flüssigkeit hergestellt ist.

5. Elektrochemischer Gassensor (1) nach einem der Ansprüche 1 bis 4, **dadurch gekennzeichnet, dass** die auf der gaspermeablen Membran aufgetragene Graphenschicht (3) aus reduziertem Graphenoxid besteht.

6. Elektrochemischer Gassensor (1) nach einem der Ansprüche 1 bis 5, **dadurch gekennzeichnet, dass** die Elektrode (100) hergestellt ist durch ein Verfahren, das die folgenden Schritte aufweist:
a. Bereitstellen einer gaspermeablen Membran (4)
b. Aufbringen einer Graphenoxiddispersion auf der gaspermeablen Membran (4)
c. Behandeln des auf der gaspermeablen Membran abgesetzten Graphenoxides mit einem Reduktionsmittel.

7. Elektrochemischer Gassensor (1) nach einem der Ansprüche 1 bis 5, **dadurch gekennzeichnet, dass** die Elektrode (100) hergestellt ist durch ein Verfahren, das die folgenden Schritte aufweist:
a. Dispergieren von Graphenoxid in einer flüchtigen Flüssigkeit
b. Behandeln der Graphenoxiddispersion mit einem Reduktionsmittel, so dass die Graphenoxiddispersion zumindest teilweise in eine Graphendispersion überführt wird
c. Aufbringen der entsprechend Schritt b) behandelten Dispersion auf die gaspermeable Membran (4)
d. Verdampfen der flüchtigen Flüssigkeit.

8. Elektrochemischer Gassensor (1) nach Anspruch 6 oder 7, **dadurch gekennzeichnet, dass** das Reduktionsmittel ausgewählt ist aus der Gruppe enthaltend, Hydrazin, lodwasserstoff und Mischungen enthaltend Hydrazin und lodwasserstoff.

9. Elektrochemischer Gassensor (1) nach einem der vorhergehenden Ansprüche, **dadurch gekennzeichnet, dass** der elektrochemische Gassensor (1) ein Gassensor zur Bestimmung von Chlordioxid ist.

10. Elektrochemischer Gassensor (1) nach einem der vorhergehenden Ansprüche, **dadurch gekennzeichnet, dass** der elektrochemische Gassensor (1) ein Gassensor zur Bestimmung von Propofol ist.

11. Verfahren zur Herstellung einer Elektrode (100) für einen elektrochemischen Gassensor (1) entsprechend einem der Ansprüche 1 bis 10, **dadurch gekennzeichnet, dass** das Verfahren die folgenden Schritte aufweist
a. Bereitstellen einer Graphen- und/oder Graphenoxid-haltigen Dispersion, wobei eine flüchtige Flüssigkeit als Dispersionsmittel dient,
b. Aufbringen der Dispersion auf eine gaspermeable Membran (4)
c. Verdampfen der flüchtigen Flüssigkeit, derart dass sich das Graphen und/oder Graphenoxid auf der gaspermeablen Membran (4) als Graphen- und/oder Graphenoxidschicht (3) absetzt
d. optional Behandeln des Graphenoxids mit einem Reduktionsmittel, wobei der Schritt d. optional jeweils nur dann ausgeführt wird, wenn als Elektrodenmaterial in Schritt a. ein Graphenoxid-haltiges Material in Dispersion gebracht wurde,
wobei die Schritte a., b., c. und d. wahlweise in der Reihenfolge a., b., c., d. oder a., d., b., c. ausführbar sind.

12. Verfahren nach Anspruch 11, **dadurch gekennzeichnet, dass** das Reduktionsmittel in gasförmigem Zustand oder als Lösung eingesetzt wird.

13. Verfahren nach Anspruch 11 oder 12, **dadurch gekennzeichnet, dass** das Reduktionsmittel ausgewählt ist aus der Gruppe enthaltend Hydrazin, lodwasserstoff und Mischungen enthaltend Hydrazin und lodwasserstoff.

## Claims

1. Electrochemical gas sensor (1) comprising a sensor housing (2), which is filled with electrolyte (9), a measuring electrode (100) and an auxiliary electrode (8), which are arranged in the sensor housing (2), **characterized in that** the measuring electrode (100) is an electrode having a gas-permeable membrane, where a graphene layer (3) has been applied as electrode material to the gas-permeable membrane (4).

2. Electrochemical gas sensor (1) according to Claim 1, **characterized in that** the graphene layer (3) has been applied from a dispersion to the gas-permeable membrane (4).

3. Electrochemical gas sensor (1) according to either of Claims 1 and 2, **characterized in that** the graphene layer (3) is present as multilayer graphene.

4. Electrochemical gas sensor (1) according to any of Claims 1 to 3, **characterized in that** the graphene layer (3) has been produced by the steps
a. dispersing of graphene powder in a volatile liquid,
b. application of the graphene dispersion produced in step a) to the gas-permeable membrane (4) and
c. evaporation of the volatile liquid.

5. Electrochemical gas sensor (1) according to any of Claims 1 to 4, **characterized in that** the graphene layer (3) applied to the gas-permeable membrane consists of reduced graphene oxide.

6. Electrochemical gas sensor (1) according to any of Claims 1 to 5, **characterized in that** the electrode (100) has been produced by a process comprising the following steps:
a. provision of a gas-permeable membrane (4)
b. application of a graphene oxide dispersion to the gas-permeable membrane (4)
c. treatment of the graphene oxide deposited on the gas-permeable membrane with a reducing agent.

7. Electrochemical gas sensor (1) according to any of Claims 1 to 5, **characterized in that** the electrode (100) has been produced by a process comprising the following steps:
a. dispersing of graphene oxide in a volatile liquid
b. treatment of the graphene oxide dispersion with a reducing agent so that the graphene oxide dispersion is converted at least partially into a graphene dispersion
c. application of the dispersion which has been treated according to step b) to the gas-permeable membrane (4)
d. evaporation of the volatile liquid.

8. Electrochemical gas sensor (1) according to Claim 6 or 7, **characterized in that** the reducing agent is selected from the group consisting of hydrazine, hydrogen iodide and mixtures containing hydrazine and hydrogen iodide.

9. Electrochemical gas sensor (1) according to any of the preceding claims, **characterized in that** the electrochemical gas sensor (1) is a gas sensor for determining chlorine dioxide.

10. Electrochemical gas sensor (1) according to any of the preceding claims, **characterized in that** the electrochemical gas sensor (1) is a gas sensor for determining propofol.

11. Process for producing an electrode (100) for an electrochemical gas sensor (1) according to any of Claims 1 to 10, **characterized in that** the process comprises the following steps
a. provision of a dispersion containing graphene and/or graphene oxide, where a volatile liquid serves as dispersion medium,
b. application of the dispersion to a gas-permeable membrane (4)
c. evaporation of the volatile liquid in such a way that the graphene and/or graphene oxide deposits as graphene and/or graphene oxide layer (3) on the gas-permeable membrane (4)
d. optionally treatment of the graphene oxide with a reducing agent, with step d. optionally being carried out in each case only when a material containing graphene oxide has been made into a dispersion as electrode material in step a.
and with steps a., b., c. and d. being able to be carried out either in the order a., b., c., d. or a., d., b., c.

12. Process according to Claim 11, **characterized in that** the reducing agent is used in the gaseous state or as a solution.

13. Process according to Claim 11 or 12, **characterized in that** the reducing agent is selected from the group consisting of hydrazine, hydrogen iodide and mixtures containing hydrazine and hydrogen iodide.

## Revendications

1. Capteur de gaz électrochimique (1), comportant un boîtier de capteur (2) rempli d'électrolyte (9), une électrode de mesure (100) et une électrode auxiliaire (8) qui sont disposées dans le boîtier de capteur (2),
**caractérisé en ce que** l'électrode de mesure (100) est une électrode qui présente une membrane perméable aux gaz, une couche de graphène (3) étant appliquée en tant que matériau d'électrode sur la membrane perméable aux gaz (4).

2. Capteur de gaz électrochimique (1) selon la revendication 1, **caractérisé en ce que** la couche de graphène (3) est appliquée sur la membrane perméable aux gaz (4) à partir d'une dispersion.

3. Capteur de gaz électrochimique (1) selon l'une des revendications 1 ou 2, **caractérisé en ce que** la couche de graphène (3) se présente sous forme de graphène multicouche.

4. Capteur de gaz électrochimique (1) selon l'une des revendications 1 à 3, **caractérisé en ce que** la couche de graphène (3) est obtenue par les étapes suivantes :
a. dispersion de poudre de graphène dans un liquide volatil,
b. application de la dispersion de graphène obtenue à l'étape a) sur la membrane perméable aux gaz (4) et
c. évaporation du liquide volatil.

5. Capteur de gaz électrochimique (1) selon l'une des revendications 1 à 4, **caractérisé en ce que** la couche de graphène (3) appliquée sur la membrane perméable aux gaz est constituée d'oxyde de graphène réduit.

6. Capteur de gaz électrochimique (1) selon l'une des revendications 1 à 5, **caractérisé en ce que** l'électrode (100) est obtenue par un procédé qui présente les étapes suivantes :
a. mise à disposition d'une membrane perméable aux gaz (4),
b. application d'une dispersion d'oxyde de graphène sur la membrane perméable aux gaz (4),
c. traitement de l'oxyde de graphène déposé sur la membrane perméable aux gaz avec un agent réducteur.

7. Capteur de gaz électrochimique (1) selon l'une des revendications 1 à 5, **caractérisé en ce que** l'électrode (100) est obtenue par un procédé qui présente les étapes suivantes :
a. dispersion d'oxyde de graphène dans un liquide volatil,
b. traitement de la dispersion d'oxyde de graphène avec un agent réducteur de telle sorte que la dispersion d'oxyde de graphène soit au moins partiellement convertie en une dispersion de graphène,
c. application de la dispersion traitée selon l'étape b) sur la membrane perméable aux gaz (4),
d. évaporation du liquide volatil.

8. Capteur de gaz électrochimique (1) selon la revendication 6 ou 7, **caractérisé en ce que** l'agent réducteur est choisi dans le groupe contenant l'hydrazine, l'iodure d'hydrogène et les mélanges contenant de l'hydrazine et de l'iodure d'hydrogène.

9. Capteur de gaz électrochimique (1) selon l'une des revendications précédentes, **caractérisé en ce que** le capteur de gaz électrochimique (1) est un capteur de gaz pour la détermination de dioxyde de chlore.

10. Capteur de gaz électrochimique (1) selon l'une des revendications précédentes, **caractérisé en ce que** le capteur de gaz électrochimique (1) est un capteur de gaz pour la détermination de propofol.

11. Procédé de fabrication d'une électrode (100) pour un capteur de gaz électrochimique (1) selon l'une des revendications 1 à 10, **caractérisé en ce que** le procédé présente les étapes suivantes :
a. mise à disposition d'une dispersion contenant du graphène et/ou de l'oxyde de graphène, un liquide volatil servant d'agent dispersant,
b. application de la dispersion sur une membrane perméable aux gaz (4),
c. évaporation du liquide volatil de telle sorte que le graphène et/ou l'oxyde de graphène se dépose sur la membrane perméable aux gaz (4) sous la forme d'une couche de graphène et/ou d'oxyde de graphène (3),
d. traitement facultatif de l'oxyde de graphène avec un agent réducteur, l'étape d. n'étant facultativement exécutée que si un matériau contenant de l'oxyde de graphène a été mis en dispersion en tant que matériau d'électrode à l'étape a., les étapes a., b., c. et d. pouvant au choix être exécutées dans l'ordre a., b., c., d. ou a., d., b., c.

12. Procédé selon la revendication 11, **caractérisé en ce que** l'agent réducteur est utilisé à l'état gazeux ou sous forme de solution.

13. Procédé selon la revendication 11 ou 12, **caractérisé en ce que** l'agent réducteur est choisi dans le groupe contenant l'hydrazine, l'iodure d'hydrogène et les mélanges contenant de l'hydrazine et de l'iodure d'hydrogène.
